(19) Europäisches Patentamt
European Patent Office
Office européen des brevets

(11) EP 2 151 445 B1

(12) **EUROPEAN PATENT SPECIFICATION**

(45) Date of publication and mention of the grant of the patent:
**18.02.2015 Bulletin 2015/08**

(51) Int Cl.:
***C07F 15/00*** *(2006.01)*

(21) Application number: **08290747.8**

(22) Date of filing: **01.08.2008**

(54) **Process for the preparation of bidentate Schiff base ruthenium catalysts containing a salicylaldimine-type ligand**

Verfahren zur Herstellung von Bidentat-Schiffbasen-Ruthenium-Katalysatoren mit einem Salicylaldimin-Liganden

Procédé pour la préparation de catalyseurs de ruthénium - base de Schiff bidentates contenant un ligand de type salicylaldimine

(84) Designated Contracting States:
**DE FR GB IT PL**

(43) Date of publication of application:
**10.02.2010 Bulletin 2010/06**

(73) Proprietor: **Rimtec Corporation**
**Tokyo 100-8246 (JP)**

(72) Inventors:
- **Drozdzak, Renata**
  **62320 Drocourt (FR)**
- **Nishioka, Naoki**
  **62320 Drocourt (FR)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
- **CHANG, S. ET AL.: "synthesis and characterization of new ruthenium-based olefin metathesis catalysts coordinated with bidentate schiff-base ligands" ORGANOMETALLICS, vol. 17, no. 16, 1998, pages 3460-3465, XP002509214**
- **OCCHIPINTI, G. ET AL.: "green and efficient synthesis of bidentate schiff base ru catalysts for olefin metathesis" JOURNAL OF ORGANIC CHEMISTRY, vol. 72, no. 9, 2007, pages 3561-3564, XP002509215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 151 445 B1

## Description

### Field of the invention

The present invention relates to a process for the preparation of bidentate Schiff base ruthenium catalysts containing a salicylaldimine-type ligand.

### Background of the invention

During recent years, olefin metathesis has seen extraordinary development and has turned out to be a very versatile and efficient tool in organic synthesis. Ruthenium-based catalysts have become the first-choice catalysts for organic synthesis. During recent years, a huge effort has been dedicated to further develop and improve the characteristics of the Grubbs-type ruthenium catalysts. In this context, in 1998, Grubbs and co-workers disclosed a class of ruthenium-based catalyst for olefin metathesis involving bidentate Schiff base ligands **3**. The synthetic protocol for the bidentate Schiff base Ru catalysts disclosed by Grubbs and co-workers, however, is saddled with a serious drawback, namely the use of a thallium(I) as counter ion for salicylaldimines (Scheme 1) (S. Chang, LeRoy Jones II, Ch. Wang, L. M. Henling, R. H. Grubbs; Organometallics 1998, 17, 3460-3465).

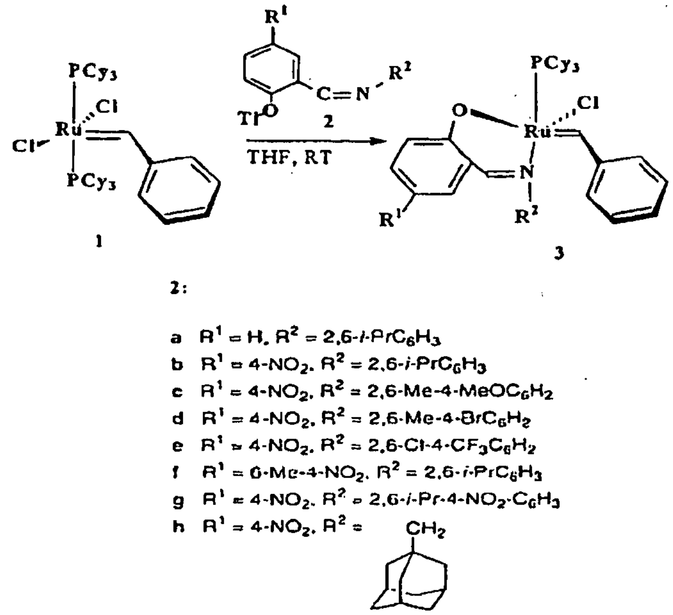


Scheme 1.

Further improvement of Grubbs protocol has been given by Bjorsvik and co-workers, where the complexation with ruthenium was conducted by reacting one salicylaldimine ligand equivalent with 1 equiv of Grubbs first-generation catalyst (**1**) in presence of a 0.5 equiv of $Ag_2CO_3$ used as base (G. Occhipinti, V. R. Jensen, H. R. Bj∅rsvik, J. Org. Chem. 2007, 72, 3561-564). The complexation utilising the ligands containing nitro group provided a yield in the range 78-96%, which was as good as or better than the previously disclosed protocol.

The reaction utilising the ligand that lacks the electron-withdrawing p-nitro group, however, provided only a tiny yield, <2%. Attempts to improve the outcome of this reaction by prolonged reaction time and elevated temperature did not afford any significant improvements (a yield of only 4% was measured). It is believed that the major reason for the unsuccessful complexation was the relatively weak base (silver carbonate) that is used for the deprotonation of the phenolic group.

Further efforts concerning the synthesis of NHC-salicylaldimine complexes concentrated on using the standard means for introducing the $H_2$IMes ligand, i.e., *in situ* formation of the free carbene from the imidazolinium salt with potassium *tert*-butoxide and subsequent reaction with the phosphine bearing ruthenium complex **3.** Attempts to prepare complex **4** by this method resulted, however, in decomposition of the ruthenium benzylidene starting material. Faced with this roadblock, Verpoort et al. have chosen to approach **4** by introducing salicylaldimine ligands to a complex already bearing the $H_2$IMes ligand (B. Allaert, N. Dieltiens, N. Ledoux, C. Vercaemst, P. Van Der Voort, Ch. V. Stevens, A.

Linden, F. Verpoort, J. Mol. Cat. A: 2006, 260, 221-226). Alkoxide and aryloxide ligands, as well as neutral donors, react readily with bis (pyridine) precursor **6.** The pyridine ligands in **6** are far more labile than the phosphine ligand in **5** and are displaced easily by incoming Schiff base ligand, especially with the assistance of thallium ions. Accordingly, the thallium salts of salicylaldimine ligands **2** were prepared *in situ* with thallium ethoxide and reacted with **6** (Scheme 2).

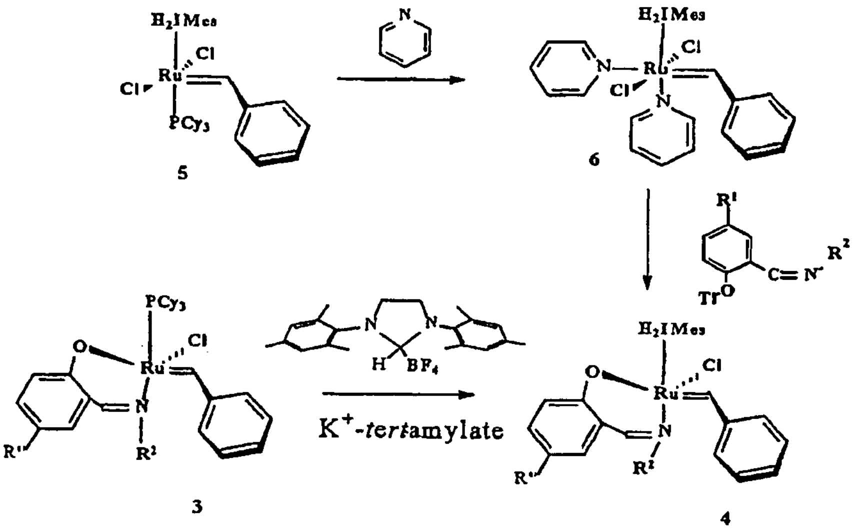


Scheme 2

## Summary of the invention

It is the object underlying the present invention to provide a short, efficient and environmentally benign alternative synthetic process for the preparation of bidentate Schiff base Ru catalysts.

The present invention provides a process for the preparation of a catalyst having the following formula:

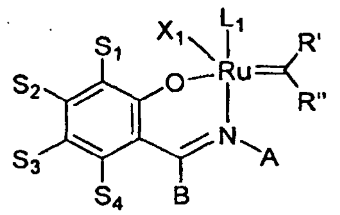

(I)

wherein

$X_1$ denotes an anionic ligand;

$L_1$ is a neutral electron donor ligand;

R' and R" together form a benzylidene moiety;

$S_1$ to $S_4$ may be the same or different and are defined as for the compound of formula (III) shown below;

A is

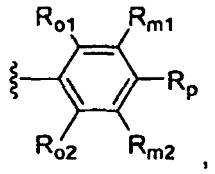

heteroaryl, substituted or unsubstituted alkyl, heteroalkyl or cycloalkyl,

B is hydrogen, $C_1$-$C_{20}$ alkyl, $C_1$-$C_{20}$ heteroalkyl aryl or heteroaryl, wherein each non-hydrogen group may be optionally substituted with one or more moieties selected from the group consisting of $C_1$-$C_{10}$ alkyl and aryl;

$R_{o1}$, $R_{o2}$, $R_{m1}$, $R_{m2}$ and $R_p$ are each selected from the group consisting of hydrogen, $C_1$-$C_{20}$ alkyl, $C_1$-$C_{20}$ heteroalkyl $C_1$-$C_{20}$ alkoxy, aryl, aryloxy, heteroaryl, heterocyclolalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of $C_1$-$C_{20}$ alkyl, $C_1$-$C_{20}$ alkoxy and aryl, wherein $R_{o1}$, $R_{o2}$, $R_{m1}$, $R_{m2}$ and $R_p$ can be joined to form a fused cyclic aliphatic or aromatic ring optionally substituted with one or more moieties selected from the group consisting of $C_1$-$C_{20}$ alkyl, $C_1$-$C_{20}$ heteroalkyl, $C_1$-$C_{20}$ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of $C_1$-$C_{20}$ alkyl, $C_1$-$C_{20}$ alkoxy and aryl, comprising the following steps:

(i) reacting a compound of the formula (V)

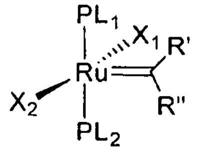 (V)

wherein $PL_1$ and $PL_2$ denote a phosphine ligand, $X_1$ and $X_2$ denote an anionic ligand and R' and R" are as defined above, with a precursor of a non-phosphine ligand $L_1$ as defined above to obtain a compound of the formula (VI)

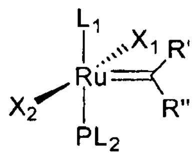 (VI)

wherein $L_1$, $PL_2$, $X_1$,$X_2$, R' and R" are as defined above, and
(ii) reacting the compound of formula (VI) with a compound of the formula (III)

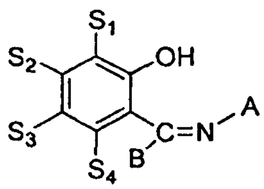 (III)

wherein A and B are as defined above and wherein $S_1$ to $S_4$ are substituents which are selected such that the compound of the formula (III) has a $pK_a \geq 6.2$, in the presence of a weak base having a $pK_b$ in the range of 3.5 - 7.0.

## Detailed description of the invention

The present invention is based on the surprising discovery that the successful complexation of the salicylaldimine ligand having a $pK_a \geq 6.2$ with ruthenium is possible in the presence of a weak base such as $Ag_2CO_3$, for example, in order to prepare ruthenium catalysts of formula (I).

The NMR analysis of the reaction mixture obtained when carrying out the process according to the present invention shows that the complexation proceeds trough several intermediate complexes which gradually disappear during the reaction, which has not been observed in any case for the benzylidene analogues. The complexation utilising $Ag_2CO_3$ as a weak base, for example, provides excellent yields in the range of 90-98%, which is highly superior to the yield obtained using thallium(I) salts.

This is shown in an exemplary manner in Scheme 4 below:

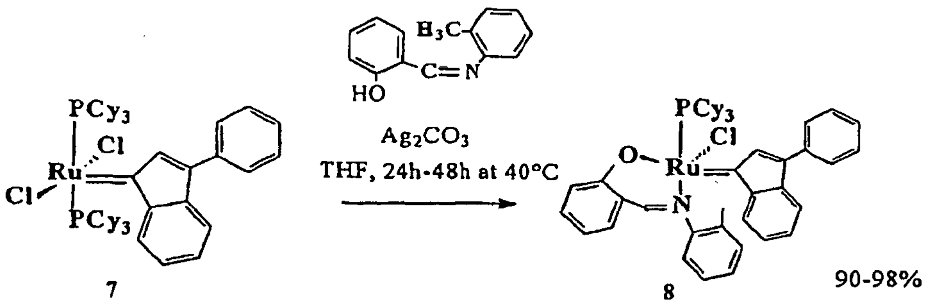


Scheme 4

The replacement of the phosphine ligand with a non-phosphine ligand $L_1$ occurs already in the first step. Thus, according to the invention a compound of the formula (V)

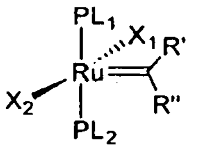

(V)

is reacted with a precursor of a non-phosphine ligand $L_1$ first to obtain a compound of the formula (VI)

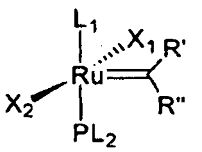

(VI)

and the salicylaldimine ligand of the formula (III)

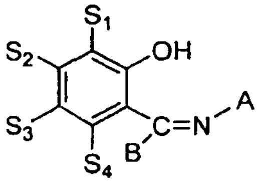

(III)

is only introduced in the next step in the presence of the weak base, such as $Ag_2CO_3$, for example, to prepare the desired bidentate Schiff base ruthenium catalyst.

The *in situ* methods for preparation of SIMes containing ruthenium catalysts, in which all ingredients, that is, a SIMes ligand precursor, such as complex 7, for example, and a strong base are mixed together in an appropriate solvent (THF, benzene, toluene or hexane) lead to undesired results, such as diminished yields and formation of significant amounts of by-products. At least one of the contaminants is a ruthenium hydride or alkoxide species, which may be responsible for various side reactions. Treatment of 2 equiv of SIMes-Cl and 2 equiv of LiHMDS in toluene at 40°C leads first to the formation of a second generation of indenylidene catalyst, bearing the $PCy_3$ moiety, which can be explained by ligand metathesis leading to bis-chloride-Ruthenium complex and decoordination of imine salt. The "base free" methods involving the use of SIMes adducts such as: chloroform adduct, $CO_2$SIMes, Ag(SIMes)Cl, which requires higher temperature (80°C), fail due to low thermal stability of complex 8.

However, the complex 10, for example, can be obtained successfully by reaction of complex 8 with 3-4 equivalents of SIMes in hexane at 50°C, (Scheme 5). After the solvent is filtered off and remaining solid is washed several times with hexane, complex 10 can be isolated as a dark microcrystalline solid in 81% yield and with high purity as a quasi-one pot process which is exemplified in Scheme 5 below:

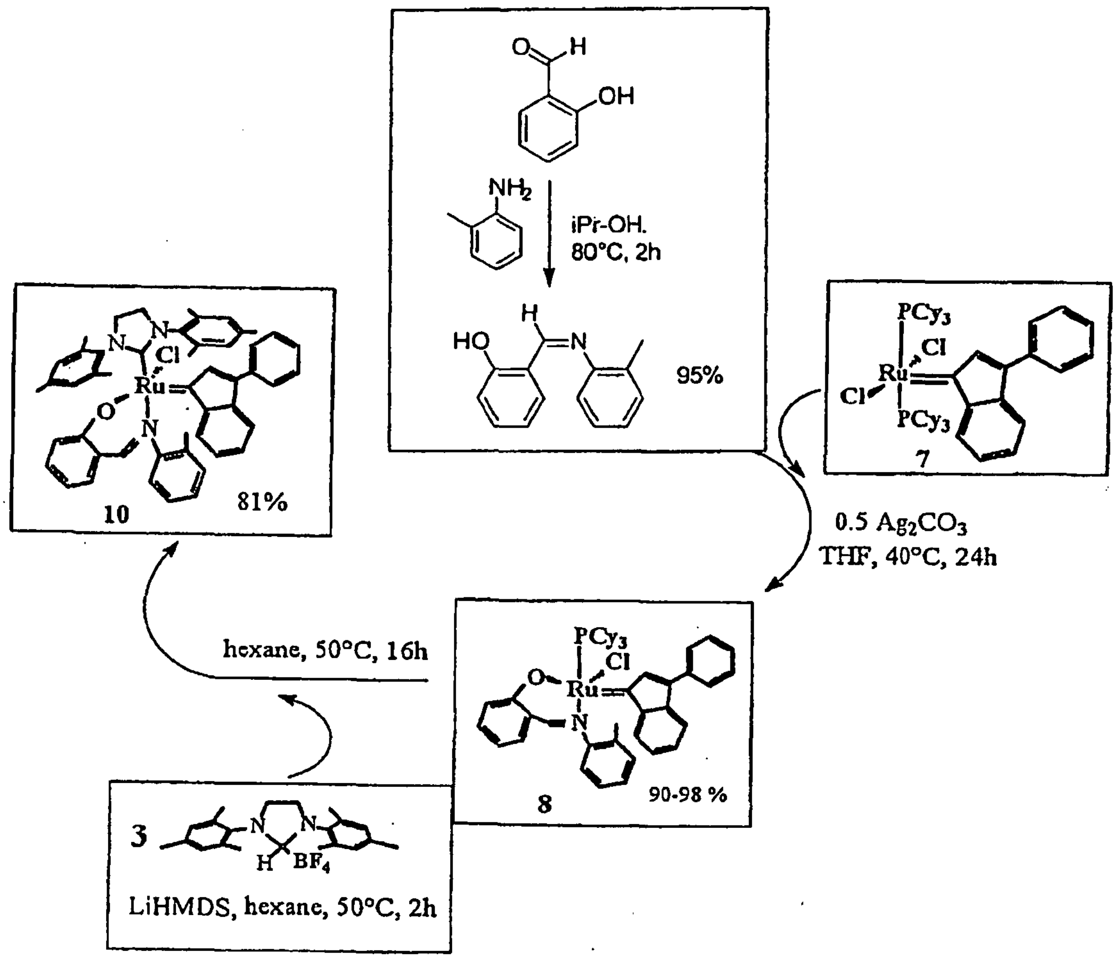


Scheme 5

As the compounds used in the process according to the present invention are sensitive to air, moisture and impurities, it should be made sure that the starting material, the reagents and solvents used contain no impurities and are well dried. For example, in the reaction shown in Scheme 5 above, the quality of the SIMes-$BF_4$ salt is important to obtain the optimum results. Preferably, a salt is used which has been prepared according to the method by Hoveyda, recrystallised from ethanol (99.8%) and dried under vacuum.

The complexation of ruthenium with the salicylaldimine ligand is also exemplified in Scheme 6 below. The first step is the substitution of one phosphine ligand by free SIMes, resulting in a mixed complex **11.** The second step comprises the coordination of the salicylaldimine ligand by substituting the remaining phosphine ligand and one of the two chloro ligands. Noteworthy this protocol does not require the synthesis of a pyridine complex, nor any further purification. This procedure is highly superior compared to the previously described one using a NHC-pyridine complex

and a thallium salt.

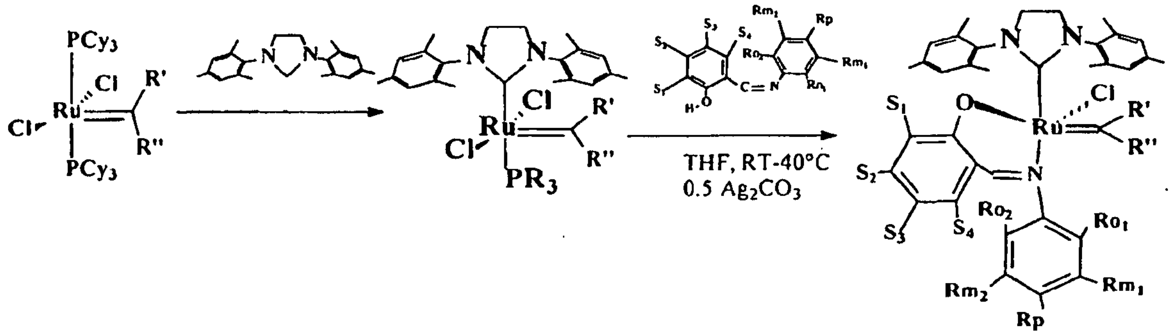


Scheme 6

As mentioned above, one of the key features of the process according to the present invention is the successful complexation of ruthenium with the salicylaldimine ligand having a $pK_a \geq 6.2$ in the presence of a weak base.

As used herein, the terms below have the meanings indicated.

The parameter $pK_a$ is based on the so-called acid dissociation constant (denoted $K_a$) which is the equilibrium constant for the dissociation of a weak acid. According to the Br∅nsted-Lewis theory of acids and bases, an acid is a proton donor (HA, where H represents an acidic hydrogen atom), and a base is a proton acceptor. In aqueous solution, water can function as a base, as in the following general example.

$$HA + H_2O \rightleftarrows A^- + H_3O^+$$

Acid dissociation constants are also known as the **acidity constant** or the **acidionization constant**. The term is also used for $pK_a$, which is equal to the negative decimal logarithm of $K_a$ (cologarithm of $K_a$).

In the present invention, the $pK_a$ value is determined by using Advanced Chemistry Development (ACD/Labs) Software, such as software V8.14 for Solaris referenced in J. Org. Chem. 2007, 72, 3561-3564.

The ACD/$pK_a$ DB software uses Hammett equations derived from a library of compounds to calculate the aqueous $pK_a$. In addition, two reference databases are available - one contains > 31,000 experimental $pK_a$ values for approximately 16,000 compounds in aqueous solutions; the other provides experimental data for more than 2000 molecules in non-aqueous solvents. This software is used by the majority of pharmaceutical and API companies worldwide, and has been tested on a broad variety of chemical classes.

The salicylaldimine ligand of formula (III) used in the present invention has a $pK_a \geq 6.2$ which is above the $pK_a$ of $5.81 \pm 0.30$ mentioned by Bj∅rsvik in J. Org. Chem. 2007, 72, 3561-3564 for a complexation resulting in tiny yields (2%).

According to the present invention, a complexation can be achieved in high yields even when using salicylaldimine ligands having a $pK_a$ as high as 11.

The $pK_a$ of the salicylaldimine ligand is basically determined by the nature of the substituents $S_1$ to $S_4$. It is common general knowledge that electron-withdrawing groups (such as the nitro groups described in the above mentioned paper by Bj∅rsvik) will decrease the $pK_a$ of the phenolic group whereas electron-neutral (hydrogen) or electron-donating groups will increase the $pK_a$.

Suitable electron-donating groups are known to the skilled person and include substituted or unsubstituted amino, mono- and dialkylamino, $C_1$-$C_{20}$ alkoxy, $C_1$-$C_{20}$ alkyl, thioalkyl, aryl, aryloxy and the like.

Examples include methoxy, methyl, isopropyl, t-butyl and dimethylamino.

On the basis of these lists of electron-neutral/-donating groups, the skilled person can easily conceive compounds of formula (III) having a $pK_a \geq 6.2$.

The presence of electron-withdrawing groups is not excluded provided that the corresponding phenols have a $pK_a \geq 6.2$. For example, such electron-withdrawing groups include ammonium, nitro halogen, such as bromo, chloro, fluoro, iodo and the like.

The following Table 1 lists $pK_a$ values for various phenolic Schiff base ligand compounds:

**Table 1**

| Phenolic part | | | | | Aniline part | | | | | pKa |
|---|---|---|---|---|---|---|---|---|---|---|
| No | $S^1$ | $S^2$ | $S^3$ | $S^4$ | $R_{o1}$ | $R_{o2}$ | $R_{m1}$ | $R_{m2}$ | $R_p$ | |
| **pKa 7.22-11.08** | | | | | | | | | | |
| 1 | H | H | tbPhO[3*] | H | $-CH_3$ | H | H | H | H | 8.95 |
| 2 | H | H | Pyr[2*] | H | $-CH_3$ | H | H | H | H | 9.51 |
| 3 | H | H | Py[4*] | H | H | H | H | H | H | 7.14 |
| 4 | H | H | Pip[1*] | H | $-CH_3$ | H | H | H | H | 11.08 |
| 5 | H | Pip[1*] | H | Pip[1*] | $-CH_3$ | H | H | H | H | 9.55 |
| 6 | H | Pip[1*] | H | H | $-CH_3$ | H | H | H | H | 9.17 |
| 7 | Pip[1*] | H | H | H | $-CH_3$ | H | H | H | H | 10.05 |
| 8 | $OCH_3$ | H | $-OCH_3$ | H | $-CH_3$ | $-CH_3$ | H | H | H | 9.25 |
| 9 | $OCH_3$ | H | $-OCH_3$ | H | $-CH_3$ | H | H | H | H | 9.24 |
| 10 | $OCH_3$ | H | $-OCH_3$ | H | $-CH_3$ | $-CH_3$ | H | H | $-CH_3$ | 9.32 |
| 11 | $OCH_3$ | H | $-OCH_3$ | $OCH_3$ | $-CH_3$ | $-CH_3$ | H | H | $-CH_3$ | 8.93 |
| 12 | H | H | H | H | $-OCH_3$ | H | H | H | H | 8.87 |
| 13 | H | H | H | H | $-CH_3$ | $-CH_3$ | H | H | H | 8.85 |
| 14 | H | H | H | H | -Cl | H | H | H | H | 8.58 |
| 15 | H | H | H | H | $-CH_3$ | $-CH_3$ | H | H | $-CH_3$ | 8.84 |
| 16 | H | H | H | H | $-CH_3$ | $-CH_3$ | H | H | -Br | 8.69 |
| 17 | H | H | H | H | -$^i$Pr | -$^i$Pr | H | H | H | 8.83 |
| 18 | H | H | H | H | H | H | H | H | -$^t$But | 8.92 |
| 19 | H | H | H | H | H | H | H | H | H | 8.47 |
| 20 | H | H | H | H | H | H | H | H | -$^t$But | 8.92 |
| 21 | H | H | H | H | H | H | -Br | H | H | 8.76 |
| 22 | H | H | H | H | $-CH_3$ | H | H | H | H | 8.93 |
| 23 | H | H | H | H | -$^t$But | -$^t$But | H | H | -$^t$But | 8.93 |
| 24 | H | H | H | H | H | H | H | H | H | 8.47 |
| 25 | H | H | $-OCH_3$ | H | $-CH_3$ | H | H | H | H | 9.24 |
| 26 | H | H | $-OCH_3$ | H | H | H | H | H | -$^t$But | 9.32 |
| 27 | H | H | $-OCH_3$ | H | $-CH_3$ | $-CH_3$ | H | H | $-CH_3$ | 9.33 |
| 28 | H | H | $-OCH_3$ | H | $-CH_3$ | $-CH_3$ | H | H | H | 9.25 |
| 29 | H | $-OCH_3$ | H | H | $-CH_3$ | H | H | H | H | 8.38 |
| 30 | H | $-OCH_3$ | H | H | -$^t$But | -$^t$But | H | H | -$^t$But | 8.47 |
| 31 | H | $-OCH_3$ | H | | H | H | H | H | -$^t$But | 8.45 |
| 32 | H | $-OCH_3$ | H | $OCH_3$ | H | H | H | H | -$^t$But | 8.05 |
| 33 | H | $-OCH_3$ | H | | $-CH_3$ | $-CH_3$ | H | H | H | 8.39 |
| 34 | H | $-OCH_3$ | H | | $-CH_3$ | $-CH_3$ | H | H | $-CH_3$ | 8.46 |
| 35 | H | $-OCH_3$ | H | | Cl | H | H | H | H | 8.12 |

(continued)

| Phenolic part | | | | | Aniline part | | | | | pKa |
|---|---|---|---|---|---|---|---|---|---|---|
| No | $S^1$ | $S^2$ | $S^3$ | $S^4$ | $R_{o1}$ | $R_{o2}$ | $R_{m1}$ | $R_{m2}$ | $R_p$ | |
| pKa 7.22-11.08 | | | | | | | | | | |
| 36 | H | $-OCH_3$ | H | | Cl | H | H | H | $-OCH_3$ | 8.47 |
| 37 | H | $-OCH_3$ | H | $OCH_3$ | $-CH_3$ | $-CH_3$ | H | H | $-CH_3$ | 8.06 |
| 38 | H | $-SCH_3$ | H | H | $-CH_3$ | H | H | H | H | 8.27 |
| 39 | H | $-SCH_3$ | H | $-SCH_3$ | $-CH_3$ | H | H | H | H | 7.75 |
| 40 | H | $NH_2$ | H | H | $-CH_3$ | H | H | H | H | 8.81 |
| 41 | H | $NH_2$ | H | $NH_2$ | $-CH_3$ | H | H | H | H | 8.83 |
| 42 | H | $NH_2$ | H | $NH_2$ | H | H | H | H | $-CH_3$ | 8.91 |
| 43 | $OCH_3$ | H | H | H | $-CH_3$ | $-CH_3$ | H | H | H | 8.77 |
| 44 | H | -Br | H | H | H | H | H | H | H | 7.37 |
| 45 | H | -Br | H | H | $-CH_3$ | H | H | H | H | 7.79 |
| 46 | H | -Br | H | -Br | $-CH_3$ | H | H | H | H | 6.80 |
| 47 | H | H | H | H | H | H | -Cl | H | H | 8.67 |
| 48 | -Br | H | H | H | $-CH_3$ | H | H | H | H | 7.22 |
| 49 | H | H | -Cl | H | $-CH_3$ | H | H | H | H | 8.87 |
| 50 | H | -Cl | -Cy | H | H | H | H | H | $-CH_3$ | 7.58 |
| 51 | H | -Cl | -Cy | H | $-CH_3$ | H | H | H | H | 7.51 |
| 52 | H | H | -Br | H | $-CH_3$ | H | H | H | H | 8.19 |
| 53 | H | H | -F | H | $-CH_3$ | H | H | H | H | 8.77 |
| 54 | $-^tBut$ | H | $-^tBut$ | H | $-CH_3$ | H | H | H | H | 10.34 |
| 55 | $-^tBut$ | H | $-^tBut$ | H | $-CH_3$ | $-CH_3$ | H | H | $-CH_3$ | 10.42 |
| 56 | $-^tBut$ | H | $-^tBut$ | H | $-^tBut$ | $-^tBut$ | H | H | $-^tBut$ | 10.43 |
| 57 | $-^tBut$ | H | $-^tBut$ | $-^tBut$ | H | H | H | H | $-CH_3$ | 10.53 |
| 58 | $-^tBut$ | H | Cy | H | $-CH_3$ | H | H | H | H | 10.36 |
| 59 | $-^tBut$ | H | H | H | $-CH_3$ | $-CH_3$ | H | H | $-CH_3$ | 10.22 |
| 60 | $-^tBut$ | H | H | Cl | $-CH_3$ | H | H | H | H | 9.14 |
| 61 | $-^tBut$ | H | Cy | Cl | $-CH_3$ | H | H | H | H | 9.39 |
| 62 | H | $-^tBut$ | H | H | $-CH_3$ | H | H | H | H | 8.86 |
| 63 | H | $-^tBut$ | H | H | $-^tBut$ | $-^tBut$ | H | H | $-^tBut$ | 8.97 |
| 64 | H | $-^tBut$ | H | H | $-CH_3$ | $-CH_3$ | H | H | $-CH_3$ | 8.97 |
| 65 | H | $-^tBut$ | H | H | H | H | H | H | $-^tBut$ | 8.95 |
| 66 | H | $-^tBut$ | H | $-^tBut$ | H | H | H | H | $-CH_3$ | 9.05 |
| 67 | H | H | $-N(CH_3)_2$ | H | $-CH_3$ | H | H | H | H | 7.85 |
| 68 | H | H | $-N(CH_3)_2$ | H | $-CH_3$ | $-CH_3$ | H | H | H | 8.86 |
| 69 | H | $N(CH_3)_2$ | H | H | $-CH_3$ | H | H | H | H | 8.86 |
| 48 | H | $N(CH_3)_2$ | H | H | $-CH_3$ | $-CH_3$ | H | H | H | 8.86 |
| 70 | H | $N(CH_3)_3$ | H | H | $-CH_3$ | H | H | H | H | 6.64 |

(continued)

| Phenolic part | | | | | Aniline part | | | | | pKa |
|---|---|---|---|---|---|---|---|---|---|---|
| No | $S^1$ | $S^2$ | $S^3$ | $S^4$ | $R_{o1}$ | $R_{o2}$ | $R_{m1}$ | $R_{m2}$ | $R_p$ | |
| pKa 7.22-11.08 | | | | | | | | | | |
| 71 | H | $N(CH_3)_2$ | H | H | Ipr | Ipr | H | H | H | 8.84 |
| 72 | H | H | $-OCF_3$ | H | $-CH_3$ | H | H | H | H | 8.14 |
| 73 | H | H | $-CF_3$ | H | $-CH_3$ | H | H | H | H | 7.36 |
| 74 | H | $-CF_3$ | H | H | $-CH_3$ | H | H | H | H | 7.75 |
| 75 | H | OPh | H | H | $-CH_3$ | H | H | H | H | 8.09 |
| 76 | H | OPh | H | OPh | $-CH_3$ | H | H | H | H | 7.39 |
| 91 | H | H | Ph | H | $-CH_3$ | $-CH_3$ | H | H | $-CH_3$ | 5.95 |
| 92 | H | Ph | H | H | $-CH_3$ | $-CH_3$ | H | H | $-CH_3$ | 8.53 |
| 93 | H | Ph | H | Ph | $-CH_3$ | H | H | H | H | 8.29 |
| 94 | Ph | H | Ph | H | $-CH_3$ | H | H | H | H | 8.68 |
| 95 | H | H | Ph | H | $-CH_3$ | $-CH_3$ | H | H | $-CH_3$ | 8.66 |
| pKa 6.36-6.95 | | | | | | | | | | |
| 96 | -Br | H | -Br | H | $-CH_3$ | H | H | H | H | 6.64 |
| 97 | -Cl | H | Cl | H | $-CH_3$ | H | H | H | H | 6.80 |
| 98 | H | | H | -Br | $-CH_3$ | $-CH_3$ | H | H | $-CH_3$ | 6.89 |
| 99 | H | $NO_2$ | H | H | $-CH_3$ | $-CH_3$ | H | H | H | 6.95 |
| 100 | H | $NO_2$ | H | H | $-CH_3$ | H | H | H | H | 6.95 |
| 101 | H | $NO_2$ | H | H | Cl | H | H | H | H | 6.61 |
| 102 | H | $NO_2$ | H | H | $-CH_3$ | H | H | H | H | 7.04 |
| 103 | H | $NO_2$ | H | H | $-CH_3$ | H | H | H | H | 7.04 |
| 104 | H | $NO_2$ | H | H | H | H | H | H | $NO_2$ | 6.36 |
| 105 | $OCF_3$ | H | H | H | $-CH_3$ | H | H | H | H | 6.88 |
| 106 | $-CF_3$ | H | H | H | $-CH_3$ | H | H | H | H | 6.77 |
| 107 | H | $-CF_3$ | H | $-CF_3$ | $-CH_3$ | H | H | H | H | 6.72 |
| 4.89-5.95 | | | | | | | | | | |
| 108 | H | $NO_2$ | H | $NO_2$ | $-CH_3$ | H | H | H | H | 5.42 |
| 109 | F | F | F | F | $-CH_3$ | H | H | H | H | 5.50 |
| 110 | Cl | Cl | Cl | Cl | $-CH_3$ | H | H | H | H | 4.89 |
| 111 | H | H | $NO_2$ | | $-^tBut$ | $-^tBut$ | H | H | $-^tBUt$ | 5.89 |
| 112 | H | H | $NO_2$ | | $-^tBut$ | H | H | H | H | 5.82 |
| 113 | H | H | $NO_2$ | | $^tPr$ | $^tPr$ | H | H | H | 5.81 |
| 114 | H | H | $NO_2$ | | $-CH_3$ | $-CH_3$ | H | H | H | 5.83 |
| 115 | H | H | $NO_2$ | | $-CH_3$ | H | H | H | H | 5.82 |
| 116 | H | H | $NO_2$ | | $-CH_3$ | $-CH_3$ | H | H | | 5.72 |
| 117 | H | H | $NO_2$ | | $-CH_3$ | $-CH_3$ | H | H | $-CH_3$ | 5.89 |
| 118 | H | H | $NO_2$ | | -Cl | H | H | H | H | 5.63 |

(continued)

| 4.89-5.95 | | | | | | | | | | |
|---|---|---|---|---|---|---|---|---|---|---|
| 119 | H | H | $NO_2$ | | H | H | H | H | H | 5.55 |
| 120 | H | H | $NO_2$ | | H | H | -Br | H | H | 5.77 |
| 121 | H | H | $NO_2$ | | H | H | H | H | -Cl | 5.71 |
| 122 | H | H | $NO_2$ | | H | H | H | H | $-CH_3$ | 5.88 |
| 123 | H | H | $NO_2$ | | H | H | H | H | $-^t$But | 5.88 |
| 124 | H | H | $NO_2$ | | H | H | H | H | $-N(CH_3)_2$ | 5.88 |

[1](Pip= Piperidinyl)
[2] (Pyrl= 1-Pyrrolidino)
[3] (tbPhO= 4-*tert*-Butylphenoxy)
[4](Py=2-Pyridyl)

Entries No. 1 to 107 have a $pK_a \geq 6.2$ and hence are suitable for use in the present invention.

Entries No. 108 to 124 have a $pK_a$ lower than 6.2 and their use is not according to the invention.

It is worth noting that it was not possible to obtain bidentate Schiff base ruthenium catalysts when using the above phenolic compounds having a $pK_a$ lower than 6 in an attempt to prepare indenylidene type catalysts rather than the benzylidene type catalysts described by Bj∅rsvik. Apparently, the method disclosed by Bjorsvik is limited to the preparation of benzylidene type catalysts even when salicylaldimine ligands are used having a $pK_a$ in the range of 5.8.

On the other hand, indenylidene type bidentate Schiff base ruthenium catalysts can be obtained in good yields using phenolic compounds of formula (III) having a $pK_a \geq 6.2$, preferably $\geq 7.2$, more preferably $\geq 7.5$, still more preferably $\geq 7.8$ and most preferably in the range of 8.4 to 10.3.

However, even compounds having a $pK_a$ as high as 12, 12.5, 13 or even 15 can successfully be used in the process according to the present invention.

Next, the $pK_b$ value will be explained:

A weak base is a base that does not ionize fully in an aqueous solution. As Bronsted-Lowry bases are proton acceptors, a weak base may also be defined as a base in which protonation is incomplete. This results in a relatively low pH value compared to strong bases. Bases have a pH in an aqueous solution of greater than 7 (7 is neutral, like pure water) to 14 (though some bases have pH values greater than 14). The pH value is defined as:

$$pH = -\log_{10}[H^+]$$

Since bases are proton acceptors, the base receives a hydrogen ion from water, $H_2O$, and the remaining $H^+$ concentration in the solution determines the pH value. Weak bases will cause a higher $H^+$ concentration because they are less protonated than stronger bases and, therefore, more hydrogen ions remain in the solution. If the $H^+$ concentration is increased in the formula, a low pH value results. However, the pH value of bases is usually calculated using the OH-concentration to find the pOH value first. This is done because the $H^+$ concentration is not a part of the reaction, while the OH- concentration is.

$$pOH = -\log_{10}[OH^-]$$

Since $K_w = [H_3O^+][OH^-]$ then, $K_a \times K_b = K_w$.

By taking logarithms of both sides of the equation, the following is reached:

$$\log K_a + \log K_b = \log K_w$$

Finally, multiplying throughout the equation by -1, the equation turns into:

$$pK_a + pK_b = pK_w = 14.00$$

After calculating the pOH from the above pOH formula, the pH value can be calculated using the formula

$$pH = pK_w - pOH, \text{ wherein } pK\underline{w} = 14.00 \text{ at a temperature of } 25°C$$

The weak base used in the present invention is characterised by its $pK_b$ value as defined above. Suitable weak bases for use in the present invention have a $pK_b$ value in the range of 3.5 to 7.

For example, $Ag_2CO_3$ has a $pK_b$ value of 3.68 in water, wherein the following equilibrium is formed:

$Ag_2CO_3 \rightarrow 2\ Ag^+ + CO_3^{-2}$

$CO_3^{-2} + H_2O \leftrightarrow HCO_3^{-2} + OH^-$

Examples of other suitable bases for use in the present invention include $Li_2CO_3$, $Na_2CO_3$, $K_2CO_3$ and $CuCO_3$. The $pK_b$ of these carbonates is about 3.69.

Further examples include carboxylates.

An anionic ligand ($X_1$, $X_2$) is any ligand which, when removed from a metal centre in its closed shell electron configuration, has a negative charge.

Suitable anionic ligand precursors include, but are not limited to, halides, carboxylic acids and/or their alkali metal or other salts, for example, sodium acetate, trifluoroacetate, beta-diketonates, acetylacetonate, propionate, butyrate, benzoate, or their corresponding acids; carboxylic acids and/or their alkali metal or other salts in a position alpha to a heteroaromatic nitrogen atom, such as, but not limited to, picolinic acid and substituted picolinic acids; picolinate and substituted picolinates, and their corresponding N-oxides. Suitable substituents for picolinic acid and picolinate include, but are not limited to, carboxylic acid, carboxylate, halogen, alkyl, heteroaryl, and aryl. Examples of beta-diketones (from which beta-diketonates are derived) include, but are not limited to, acetylacetone, benzoylacetone, dibenzoylmethane, diisobutyrylmethane, 2,2-dimethylheptane-3,5-dione, 2,2,6-trimethylheptane-3,5-dione, dipivaloylmethane, trifluoroacetylacetone, hexafluoroacetylacetone, benzoyltrifluoroacetone, pivaloyl-trifluoroacetone, heptafluorodimethyloctanedione, octafluorohexanedione, decafluoroheptanedione, 2-furoyltrifluoroacetone, 2-thionyltrifluoroacetone, 3-chloro-2,4-pentanedione, 3-ethyl-2,4-pentanedione, 3-methyl-2,4-pentanedione, methyl 4-acetyl-5-oxohexanoate. Preferably, $X_1$ and $X_2$ are the same and denote chlorine.

A neutral electron donor ($L_1$, $L_2$) is any non-phosphine ligand which, when removed from a metal centre in its closed shell electron configuration, has a neutral charge, i.e., is a Lewis base.

Examples of neutral electron donor ligands $L_1$ include ligands which are derived, for example, from unsubstituted or substituted heteroarenes such as furan, thiophene, pyrrole, pyridine, bipyridine, picolylimine, gamma-pyran, gamma-thiopyran, phenanthroline, pyrimidine, bipyrimidine, pyrazine, indole, coumarone, thionaphthene, carbazole, dibenzofuran, dibenzothiophene, pyrazole, imidazole, benzimidazole, oxazole, thiazole, dithiazole, isoxazole, isothiazole, quinoline, bisquinoline, isoquinoline, bisisoquinoline, acridine, chromene, phenazine, phenoxazine, phenothiazine, triazine, thianthrene, purine, bisimidazole and bisoxazole.

Particularly preferred neutral electron donors for use in the present invention include N-heterocyclic carbene (NHC) ligands. A wide range of NHC ligands are now commercially available. Suitable precursors of such neutral electron donor ligands include 1,3-diisopropylimidazolium tetrafluoroborate, 1,3-bis(1-adamantanyl)imidazolium tetrafluoroborate, 1,3-Bis-(tert-butyl)-4,5-dihydro-1H-imidazolium tetrafluoroborate, N,N'-(2,4,6-trimethyl)dihydroimidazolium chloride and N,N'-(2,6-diisopropylphenyl)dihydroimidazolium chloride, 1,3-bis(2,4,6-trimethylphenyl)-4,5-dihydroimidazolium tetrafluoroborate ($SIMes \cdot BF_4$), 1,3-bis(2,4-dimethylphenyl)-4,5-dihydroimidazolium tetrafluoroborate ($SIMe \cdot BF_4$); 1,3-bis(2-methylphenyl)-4,5-dihydroimidazolium tetrafluoroborate, 1,3-bis(2-butylphenyl)-4,5-dihydroimidazolium tetrafluoroborate, 1-methyl-3-(2,4,6-trimethylphenyl)-4,5-dihydroimidazolium tetrafluoroborate, 1-cyclohexyl-3-(2,4,6-trimethylphenyl)-4,5-dihydroimidazolium tetrafluoroborate, 1-octyl-3-(2,4,6-trimethylphenyl)-4,5-dihydroimidazolium tetrafluoroborate, 1-(1-adamantyl)-3-(2,4,6-trimethylphenyl)-4,5-dihydroimidazolium tetrafluoroborate.

Examples of phosphine ligands $PL_1$ and $PL_2$ include phospines of the formula $PR_3R_4R_5$, where $R_3$, $R_4$ and $R_5$ are selected from $C_1$-$C_{10}$ primary alkyl, secondary alkyl or cycloalkyl, alkoxy aryl, aryloxy. $R_3$, $R_4$ and $R_5$ may be the same or different.

The term "aryl" includes a mono- and polyaromatic monovalent radical such as phenyl, benzyl, naphthyl, anthracenyl, adamantyl, phenantracyl, fluoranthenyl, chrysenyl, pyrenyl, biphenylyl, picenyl and the like, including fused benzo-$C_{5-8}$ cycloalkyl radicals such as, for instance, indanyl, 1,2,3,4-tetrahydronaphtalenyl, fluorenyl and the like.

The term "heteroaryl" includes a mono- and polyheteroaromatic monovalent radical including one or more heteroatoms each independently selected from the group consisting of nitrogen, oxygen, sulfur and phosphorus, such as for instance pyridyl, pyrazinyl, pyrimidinyl, pyridazinyl, triazinyl, triazolyl, imidazolyl, pyrazolyl, thiazolyl, isothiazolyl, oxazolyl, pyrrolyl, furyl, thienyl, indolyl, indazolyl, benzofuryl, benzothienyl, quinolyl, quinazolinyl, quinoxalinyl, carbazolyl, phenoxazinyl, phenothiazinyl, xanthenyl, purinyl, benzothienyl, naphtothienyl, thianthrenyl, pyranyl, isobenzofuranyl, chromenyl, phenoxathiinyl, indolizinyl, quinolizinyl, isoquinolyl, phthalazinyl, naphthiridinyl, cinnolinyl, pteridinyl, carbolinyl, acridinyl, perimidinyl, phenanthrolinyl, phenazinyl, phenothiazinyl, imidazolinyl, imidazolidinyl, pyrazolinyl, pyrazolidinyl, pyrrolinyl, pyrrolidinyl and the like, including all possible isomeric forms thereof.

The term "cycloalkyl" includes a monocyclic aliphatic radical having from 3 to 8 carbon atoms, such as for instance cyclopropyl, cyclobutyl, methylcyclobutyl, cyclopentyl, methylcyclopentyl, cyclohexyl, methylcyclohexyl, cycloheptyl, cyclooctyl and the like, or a $C_{7-10}$ polycyclic aliphatic radical having from 7 to 10 carbon atoms such as, for instance, norbornyl or adamantyl.

As used herein, the term alkyl includes straight and branched chain saturated hydrocarbon monovalent radicals having from 1 to 6 carbon atoms such as, for example, methyl, ethyl, propyl, n-butyl, 1-methylethyl, 2-methylpropyl, 1,1-dimethylethyl, 2-methylbutyl, n-pentyl, dimethylpropyl, n-hexyl, 2-methylpentyl, 3-methylpentyl and the like, and the higher homologues thereof having 7 to 20 carbon atoms, such as for instance heptyl, ethylhexyl, octyl, nonyl, decyl, dodecyl, octadecyl and the like.

The term "heteroalkyl" denotes an alkyl group as defined above wherein one or more carbon atoms may be replaced by heteroatoms such as nitrogen, phosphorus, oxygen, sulfur and the like.

The term "heterocycloalkyl" denotes a cycloalkyl group as defined above wherein one or more carbon atoms may be replaced by heteroatoms such as nitrogen, phosphorus, oxygen, sulfur and the like.

Unless indicated otherwise, the term "substituted" refers to substituents selected from the group consisting of $C_1$-$C_{20}$ alkyl, $C_1$-$C_{20}$ heteroalkyl, $C_1$-$C_{20}$ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of $C_1$-$C_{20}$ alkyl, $C_1$-$C_{20}$ alkoxy and aryl.

According to a preferred embodiment of the invention, a catalytic quantity of silver(I) chloride is added to the reaction mixture.

The amount of weak base used is generally in the range of 1 to 2 equivalents relative to the amount of compound (III).

The starting metal complex, the Schiff base ligands, the weak base, such as $Ag_2CO_3$ and, optionally, silver(I) chloride are preferably pre-mixed and then a suitable solvent that does not react with any components of the mixture is added. In the present invention, aprotic solvents which do not possess any acidic protons having a dielectric constant above 3 are preferably used.

Generally, the dielectric constant of the solvent provides a rough measure of a solvent's polarity. Solvents with a dielectric constant of less than 15 are generally considered nonpolar. Technically, the dielectric constant measures the solvent's ability to reduce the field strength of the electric field surrounding a charged particle immersed in it. Examples are given in Table 2 below:

**Table 2**

| solvent | **dielectric constant**[(1)] |
|---|---|
| hexane | 1.89 at 20°C |
| tetrahydrofuran | **7.52 at 25°C** |
| $CH_2Cl_2$ | **8.93 at 25°C** |
| acetone | 21.01 at 20°C |
| chloroform | **4.81 at 20°C** |
| toluene | 2.38 at 23°C |
| benzene | 2.28 at 23°C |
| diethyl ether | **4.34 at 25°C** |
| (1) Solvent Physical Properties. Sigma-Aldrich. Retrieved on 23 May 2007. | |

As mentioned above, the preferred solvent for use in the present invention has a dielectric constant above 3 and such solvents include tetrahydrofuran, $CH_2Cl_2$, chloroform and diethyl ether, with tetrahydrofuran being particularly preferred.

The reaction mixture is then heated and stirred. In general, the reaction is carried out at a temperature in the range of 20-60°C.

The reaction time is in general 2 to 72 h.

After the reaction has been completed, the reaction mixture is cooled to about 0°C to remove any by-products formed such as $PCy_3AgCl$ by filtration.

Subsequently, the solvent is removed by evaporation, usually under reduced pressure.

The ratio of the compound of the formula (V) to the precursor of a non-phosphine ligand $L_1$ used in step (i) is preferably about 1-3 equivalents.

The ratio of the compound of the compound of formula (VI) to the salicylaldimine ligand used in step (ii) is preferably about 1:1.

In a preferred embodiment of the process according to the present invention $R_{o1}$ is a methyl group and $R_{o2}$ and $R_p$ are simultaneously hydrogen.

According to another preferred embodiment, $R_{o1}$ and $R_{o2}$ are methyl groups and $R_p$ is hydrogen.

According to another preferred embodiment, $R_{o1}$ and $R_{o2}$ are methyl and $R_p$ is methyl or bromide.

Still according to another preferred embodiment, $R_{o1}$ is methyl, $R_{o2}$ and $R_p$ are both hydrogen, $L_1$ is SIMes or IMes and $X_1$ is chloride.

Still according to another preferred embodiment, $R_{o1}$ and $R_{o2}$ are both methyl, Rp is hydrogen, $L_1$ is SIMes or IMes and $X_1$ is chloride.

According to another preferred embodiment, $R_{o1}$ and $R_{o2}$ are both methyl, $R_p$ is bromide, $L_1$ is SIMes or IMes and $X_1$ is chloride. Still according to another preferred embodiment, $R_{o1}$ and $R_{o2}$ are both hydrogen, $R_p$ is tertbutyl, $S^2$ is methoxy, $L_1$ is SIMes and $X_1$ is chloride.

Still according to another preferred embodiment, $R_{o1}$ and $R_{o2}$ are both hydrogen, $R_p$ is tertbutyl, $S^3$ is methoxy, $L_1$ is SIMes and $X_1$ is chloride.

Thus, according to the present invention, the following catalysts can be prepared in a short, efficient and environmentally benign process avoiding the use of thallium salts.

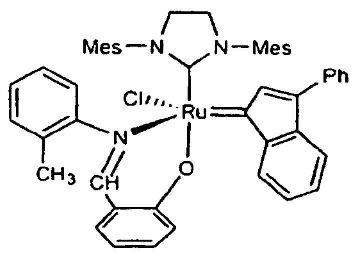

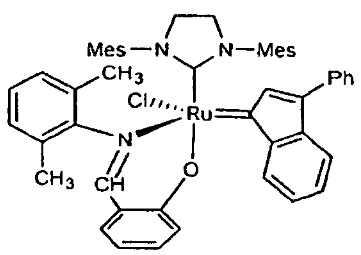

Further, using the process according to the present invention, another subclass of ruthenium metathesis catalysts can be prepared, and preferred examples of this subclass are shown below:

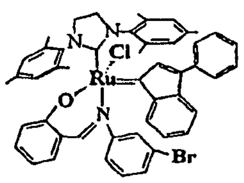

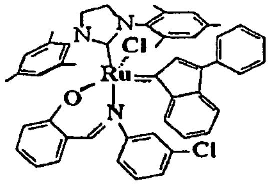

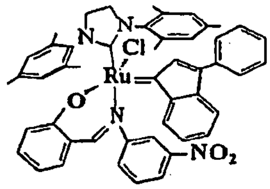

The present invention is further illustrated by the following examples wherein manipulations of oxygen and moisture-sensitive materials were performed using Schlenk techniques under an argon atmosphere. THF, toluene, or hexane can be used as exemplary solvents.

**General Procedure for the Preparation of Indenylidene-Schiff Base-Ruthenium complexes**

The stoichiometric amounts of indenylidene first-generation catalyst (**7**), the corresponding Schiff base ligand, and silver(I) carbonate were added to a Schlenk flask (50-250 ml). The flask was evacuated and backfilled with argon. Dry THF (20 ml) was then transferred to the Schlenk flask (still under argon) and stirred for a period of 6-72 h. The reaction mixture was cooled at 0°C whereas the white precipitate of $PCy_3AgCl$ (by-product) was removed by filtration. The filtrate was collected in a Schlenk flask (250 ml), and the solvent was removed by evaporation under reduced pressure.

**Example 1**

**Complex 8 (Table 1; entry 22):** Indenylidene first-generation catalyst (**7**) (500 mg, 0.54 mmol), 2-[(2-methylphenylimino)methyl]phenol (pKa: 8.93 ± 0.35) (113 mg, 0.54 mmol), silver(I) carbonate (74.48 g, 0.27 mmol), and THF (10 ml) were reacted as described above for 72 h. The reaction mixture was investigated on $^1H$ and $^{31}P$ NMR, which revealed quantitative transformation to complex **8,** namely 98%, of title complex.
$^1H$ NMR (in dichloromethane-$d_2$, 295 K)
(δ [ppm], multiplicity, intensity, J [Hz], assignment):
8. 38 (d, [1 H], J = 7.4 Hz, H-22); 7.84 (d, [1H], J = 7.0 Hz, H-7); 7.71 (d, [2H], J = 7.4 Hz, H-25); 7.51 (t, [1H], J = 7.1 Hz, H-27), 7.40 (d, [1H], J = 7.5 Hz,H-19); 7.36 (dd, [2H], H-26); 7.30 (dd, [1 H], H-12); 7.26 - 7.21 (unresolved multiplets, [5H]: H-4, H-21, H-9, H-10, H-11);
7.20 (d, [1H], J = 8.8 Hz, H-5); 7.04 (d, [1H], J = 8.8 Hz, H-2); 6.88 (s, [1 H], H-16); 6.81 (dd, [1 H], J = 5.5 Hz, H-20); 6.50 (t, [1 H], J = 7.5 Hz, H-3); 2.52 (q, [3H], J = 11.4 Hz, $PCy_3$); 2.42 (s, 3H, H-14); 1.95-1.54 (m, [20H], $CH_2$ of $PCy_3$); 1.30-1.23 (m, [20H], $CH_2$ of $PCy_3$).
$^{13}C$ NMR: 292.8 (b.s, C-15); 170.5 (s, C-1); 165.3 (s, C-7); 154.3(s, C-8); 140.9 (s, C-18); 139.6 (s, C-17); 136.6 (d, C-16); 136.0 (s, C-2); 133.5 (s, C-4); 131.8 (s, C-23); 131.2 (s, C-13); 130.4 (s, C-13); 129.4 (s, C-12); 129.1 (s, C-19); 129.0 (s, C-26); 128.9 (C-9-11); 128.9 (s, C-21); 128.2 (s, C-22); 128.0 (s, C-27); 127.4 (s, C-24); 126.3 (s, C-25); 125.5 (C-9-11); 124.7 (s, C-20); 122.4 (s, C-5); 117.5 (s, C-6); 117.3 (C-9-11); 114.4 (s, C-3); 33.1 (s, C-14); cyclohexyl resonances: 33.1 (d, J = 19.7 Hz); 29.8 (s); 29.3 (s) ; 27.8 (dd, $J^1$ = 30 Hz, $J^1$ = 10 Hz); 26.6 (dd, $J^1$ = 82 Hz, $J^1$ = 11 Hz); 26.5 (s).
$^{31}P$ NMR: 37.24 ppm (broad singlet)

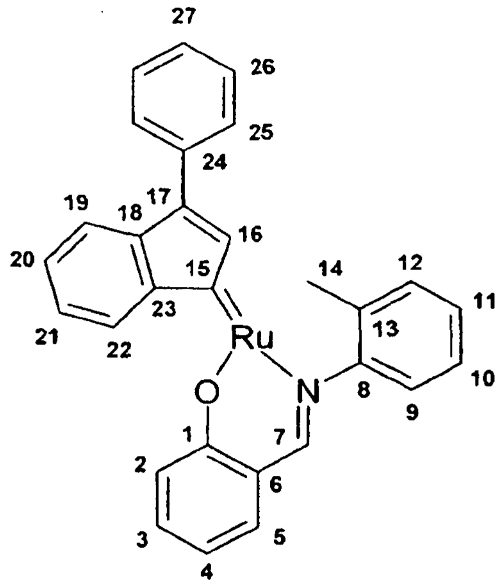

Figure. Numbering scheme of ligands ($PCy_3$ omitted for clarity)

**Structure elucidation**

The assignment of resonances in the $^1H$, $^{13}C$ , and $^{31}P$ NMR spectra taken in dichloromethane-$d_2$ was performed using 1-D and 2-D homonuclear COSY and NOESY and HSQC and HMBC ($^1H$-$^{13}C$ and $^1H$-$^{31}P$) heteronuclear experiments.

The most characteristic features of the $^1H$ NMR spectrum in dichloromethane-$d_2$ is the presence of singlet resonance of indenylidene H-16 proton at 6.88 ppm (6.85 in $CDCl_3$), which has been assigned via heteronuclear long-range coupling with carbon C-15 in HMBC experiment. Interestingly the proton H-22 of indenylidene ligand (doublet at 8.38 ppm in $CD_2Cl_2$, 8.29 ppm in $CDCl_3$ and multiplet at 8.97 ppm in benzene-$d_6$) showed the same coupling with C-15. These allowed to assign the $^1H$ and $^{13}C$ signals of indenylidene part of the complex through homonuclear COSY/NOESY and heteronuclear HSQC/HMBC couplings.

The $^1H$ NMR spectrum of Schiff base ligand is more complicated due to overlapping of salicylidene proton as well as aromatic *o*-methylphenyl proton resonances in the 7.20-7.35 ppm region. Nevertheless, the doublet resonance of azomethine proton was found typically at 7.84 ppm, which was confirmed by heteronuclear $^1H$-$^{31}P$ HMBC experiment. The H-2 and H-3 resonances of salicylidene residue were fund considerably shifted up field as doublet and doublet of doublets at 7.04 and 6.50 ppm, respectively.

The $^{31}P$ NMR spectrum consists of broad singlet resonance at 37.24 ppm (37.12 and 37.66 ppm in $CDCl_3$ and in benzene-$d_6$, respectively).

The $^{13}C$ NMR spectrum in dichloromethane showed series of singlet resonances, except the C-15 and C-16 one, which were splitted into doublets.

**Synthesis of complex 10 (Following the procedure shown on Scheme 5)**

A 50 ml dried Schlenk flask was charged with 1,3-bis(2,6-dimethylphenyl)-4,5-dihydroimidazolium tetrafluoroborate (0.8 g, 3.0 equiv.) and dry hexane 10 ml under an argon atmosphere. To this suspension was added $LiBF_4$ (3.0 equiv.) at room temperature. The reaction mixture was stirred at 50°C for 2 h, followed by filtration of this suspension to another 50 ml dried flask which contained complex **8** (0.5 g, 1.0 equiv.) under nitrogen. The reaction mixture was heated at 50°C for 16 h, allowed to cool to room temperature. The brown-orange precipitate was then filtered, washed with hexane and dried in vacuo to give **10** as a dark brown microcrystalline solid in 81%.

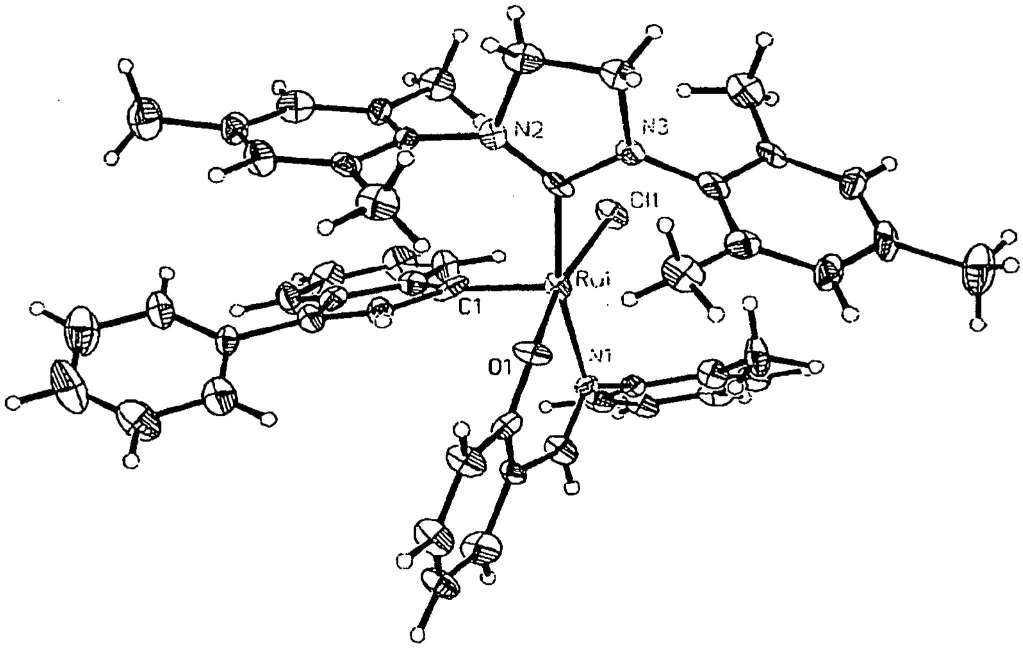

**Figure 1.** Molecular structure of the catalyst **10**

**Synthesis of complex 11 (Following the procedure shown on Scheme 5)**

A 50 ml dried Schlenk flask was charged with 1-cyclohexyl, 3-(2,6-dimethylphenyl)-4,5-dihydroimidazolium tetrafluoroborate (2.0 equiv.) and dry hexane 10 ml under an argon atmosphere. To this suspension was added LHMDSi (2.0 equiv.) at room temperature. The reaction mixture was stirred at 50°C for 2 h, followed by filtration of this suspension to another 50 ml dried flask which contained complex **8** (0.5 g, 1.0 equiv.) under nitrogen. The reaction mix-ture was heated at 50°C for 16 h, allowed to cool to room temperature. The - orange-bown precipitate was then filtered, washed with hewane and dried in vacuo to give **11** as a orange brown microcrystalline solid. The crude product was purified by flash chromatography using mixture hexane/$Et_2O$. Yield 50%

**Example 2**

**Complex 8.1 (Table 1; entry 13):** Indenylidene first-generation catalyst (**7**) (500 mg,0.54 mmol), 2-[(2,6-dimethylphenylimino)methyl]phenol (pKa: 8.93 ± 0.35) (0.54 mmol), silver(I) carbonate (74.48 mg, 0.27 mmol), and THF (10.ml) were reacted as described above for 72 h. Yield (95%).

**Example 3**

**Complex 8.2 (Table 1; entry 16):** Indenylidene first-generation catalyst (7) (500 mg, 0.54 mmol), 2-[(4-Bromo-2,6-dimethylphenylmino)methyl]phenol (pKa: 8.69 ± 0.35) (0.54 mmol), silver(I) carbonate (74.48 mg, 0.27 mmol), and THF (10 ml) were reacted as described above for 72 h. Yield (98%).

**Example 4**

**Complex 8.3 (Table 1; entry 15):** Indenylidene first-generation catalyst (7) (500 mg, 0.54 mmol), 2-[(4-methyl-2,6-dimethylphenylimino)methyl]phenol (pKa: 8.84 ± 0.35) (0.54 mmol), silver(I) carbonate (74.48 mg, 0.27 mmol), and THF (10 ml) were reacted as described above for 72 h. Yield (98%).

**Example 5**

**Complex 8.4 (Table 1; entry 17):** Indenylidene first-generation catalyst (7) (500 mg, 0.54 mmol), 2-[(2,6-diisopropylphenylimino)methyl]phenol (pKa 8.83 ± 0.35) (0.54 mmol), silver(I) carbonate (74.48 mg, 0.27 mmol), and

THF (10 ml) were reacted as described above for 72 h. Yield (98%).

**Example 6**

**Complex 8.5 (Table 1; entry 19):** Indenylidene first-generation catalyst (7) (500 mg, 0.54 mmol), 2-[(phenylimino)methyl]phenol (pKa: 8.47 ± 0.30) (0.54 mmol), silver (I) carbonate (74.48 mg, 0.27 mmol), and THF (10 ml) were reacted as described above for 72 h. Yield (92%).

**Example 7**

**Complex 8.6 (Table 1; entry 21):** Indenylidene first-generation catalyst (7) (500 mg, 0.54 mmol), 2-[(3-bromophenylimino)methyl]phenol (pKa: 8.76 ± 0.35) (0.54 mmol), silver (I) carbonate (74.48 mg, 0.27 mmol), and THF (10 ml) were reacted as described above except for the reaction time (102 h). Obtained residue was than purified on chromatography colon. Yield (30%)

**Example 8**

**Complex 8.6 (Table 1; entry 14):** Indenylidene first-generation catalyst **(7)** (500 mg, 0.54 mmol), 2-[(2-chlorophenylimino)methyl]phenol (pKa: 8.58 ± 0.35) (0.54 mmol), silver (I) carbonate (74.48 mg, 0.27 mmol), and THF (10 ml) were reacted as described above except for the reaction time (102 h). Obtained residue was than purified on chromatography colon. Yield (60%)

**Example 9 (non-working)**

**Complex 8.7 (Table 1; entry 123):** Indenylidene first-generation catalyst (7) (500 mg, 0.54 mmol), 2-[(4-tbutylphenylimino)methyl]-4-nitrophenol (pKa: 5.88± 0.30) (0.54 mmol), silver (I) carbonate (74.48 mg, 0.27 mmol), and THF (10 ml) were reacted as described above except for the reaction time (6 h). The reaction mixture was investigated on $^{31}P$ NMR, which did not reveal the presence of title complex.

**Example 10 (not according to the invention)**

**Complex 8.8 (Table 1. Entry 118):** Indenylidene first-generation catalyst (7) (500 mg, 0.54 mmol), 2-[(4-chlorophenylimino)methyl]-4-nitrophenol (pKa: 5.71± 0.30) (0.54 mmol), silver (I) carbonate (74.48 mg, 0.27 mmol), and THF (10 ml) were reacted as described above except for the reaction time (24 h). The reaction mixture was investigated on $^{31}P$ NMR, which did not reveal the presence of title complex.

**Example 11 (not according to the invention)**

**Complex 8.8 (Table 1; entry 115):** Indenylidene first-generation catalyst (7) (500 mg, 0.54 mmol), 2-[(4-methylphenylimino)methyl]-4-nitrophenol (pKa: 5.88± 0.30) (0.54 mmol), silver (I) carbonate (74.48 g, 0.27 mmol), and THF (10 ml) were reacted as described above except for the reaction time (24 h). The reaction mixture was investigated on $^{31}P$ NMR, which did not reveal the presence of title complex.

**Preparation of Benzylidene-Schiff Base-Ruthenium complexes**

**Example 12**

**Complex A (Table 1; entry 13):** Grubbs second generation catalyst (100 mg, 0.117 mmol), 2-[(2,6-dimethylphenylimino)methyl]phenol (pKa: 8.85± 0.30) (0.117 mmol), silver (I) carbonate (16.27 mg, 0.058 mmol), and THF (2 ml) were reacted at room temperature during 2 h. The solvent was evaporated and crude reaction product purified on a chromatography column to give an orange-brown complex. Yield 22%.

**Example 13**

**Complex B (Table 1; entry 15):** Grubbs second generation catalyst (100 mg, 0.117 mmol), 2-[(2,4,6-trimethylphenylimino)methyl]phenol (pKa: 8.84± 0.30) (0.117 mmol), silver (I) carbonate (16.27 mg, 0.058 mmol), and THF (2 ml) were reacted at room temperature during 2 h. The solvent was evaporated and crude reaction product purified on chromatography column to give an orange-brown complex. Yield 30%.

**Claims**

**1.** A process for the preparation of a catalyst having the following formula:

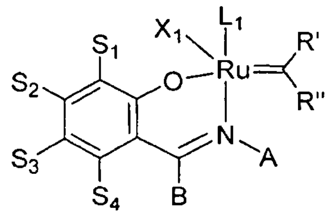

(I)

wherein

$X_1$ denotes an anionic ligand;
$L_1$ is a neutral electron donor ligand;
R' and R" together form a benzylidene moiety;
$S_1$ to $S_4$ may be the same or different and are defined as for the compound of formula (III) shown below;
A is

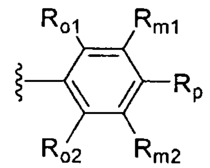

,

heteroaryl, substituted or unsubstituted alkyl, heteroalkyl or cycloalkyl.
B is hydrogen, $C_1$-$C_{20}$ alkyl, $C_1$-$C_{20}$ heteroalkyl aryl or heteroaryl, wherein each non-hydrogen group may be optionally substituted with one or more moieties selected from the group consisting of $C_1$-$C_{10}$ alkyl and aryl;
$R_{o1}$, $R_{o2}$, $R_{m1}$, $R_{m2}$ and $R_p$ are each selected from the group consisting of hydrogen, $C_1$-$C_{20}$ alkyl, $C_1$-$C_{20}$ heteroalkyl $C_1$-$C_{20}$ alkoxy, aryl, aryloxy, heteroaryl, heterocyclolalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of $C_1$-$C_{20}$ alkyl, $C_1$-$C_{20}$ alkoxy and aryl, wherein $R_{o1}$, $R_{o2}$, $R_{m1}$, $R_{m2}$ and $R_p$ can be joined to form a fused cyclic aliphatic or aromatic ring optionally substituted with one or more moieties selected from the group consisting of $C_1$-$C_{20}$ alkyl, $C_1$-$C_{20}$ heteroalkyl, $C_1$-$C_{20}$ alkoxy, aryl, aryloxy, heteroaryl, heterocycloalkyl, disulfide, carbonate, isocyanate, carbodiimide, carboalkoxy, carbamate and halogen, thioether, ketone, aldehyde, ester, ether, amine, amide, nitro, carboxylic acid, the non-hydrogen groups optionally substituted with one or more moieties selected from the group consisting of $C_1$-$C_{20}$ alkyl, $C_1$-$C_{20}$ alkoxy and aryl, comprising the following. steps:

(i) reacting a compound of the formula (V)

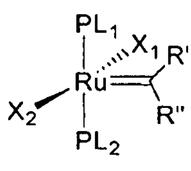

(V)

wherein $PL_1$ and $PL_2$ denote a phosphine ligand, $X_1$ and $X_2$ denote an anionic ligand and R' and R" are as defined above, with a precursor of a non-phosphine ligand $L_1$ as defined above to obtain a compound of the formula (VI)

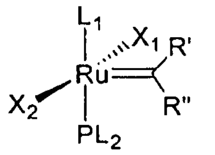

(VI)

wherein $L_1$, $PL_2$, $X_1$,$X_2$, R' and R" are as defined above, and
(ii) reacting the compound of formula (VI) with a compound of the formula (III)

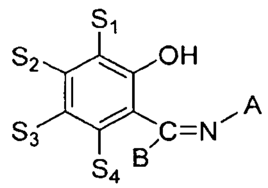

(III)

wherein A and B are as defined above and wherein $S_1$ to $S_4$ are substituents which are selected such that the compound of the formula (III) has a $pK_a \geq 6.2$, in the presence of a weak base having a $pK_b$ in the range of 3.5 - 7.0.

**2.** The process according to claim 1 wherein the weak base is selected from the group consisting of $Ag_2CO_3$, $CuCO_3$, $Li_2CO_3$, $Na_2CO_3$ and $K_2CO_3$.

**3.** The process according to claim 1 or 2 wherein the weak base is used in an amount of 1 to 2 equivalents relative to the amount of compound (III).

**4.** The process of claim 1 wherein in step (i) the compounds of the formulae (II) and (III), and the weak base are mixed and a solvent is added.

**5.** The process of claim 4 wherein the solvent has a dielectric constant ≥ 3.

**6.** The process according to claim 5 wherein the solvent is selected from the group consisting of tetrahydrofuran, $CH_2Cl_2$, chloroform, diethyl ether and mixtures thereof.

**7.** The process according to claim 1 wherein $L_1$ is SIMes (1,3-bis(mesityl)-2-imidazol-dinylidene or 1,3-bis(2,4,5-trimethylphenyl)-4,5-dihydroimidazol-2-ylidene) or IMes (1,3-bis(2,4,6-trimethylphenyl)imidazol-2-ylidene).

**8.** The process according to claim 1 wherein $X_1$ and/or $X_2$ is halogen, preferable chloride.

**9.** The process according to claim 1 wherein the substituents $S_1$ to $S_4$ are selected from the group consisting of hydrogen, amino, substituted or unsubstituted mono- and dialkylamino, $C_1$-$C_{20}$ alkyl, thioalkyl, aryl and aryloxy.

**10.** The process according to claim 1 wherein the substituents $S_1$ to $S_4$ are selected from the group consisting of hydrogen, methoxy, methylthio, amino, dimethylamino, trifluoromethyl, trifluoromethoxy, t-butyl, phenyl, phenoxy, chloro, bromo, piperidinyl, 1-pyrrolidino, 4-tert-butylphenoxy and 2-pyridyl.

**11.** The process according to claim 1 wherein $R_{o1}$, $R_{o2}$, $R_{m1}$, $R_{m2}$ and $R_p$ are selected from the group consisting of hydrogen, methyl, isopropyl, t-butyl, methoxy, dimethylamino and nitro.

**12.** The process according to claim 1 wherein the compound of formula (III) is a compound selected from the group consisting of compound Nos. 1 to 14 wherein B is hydrogen, A is

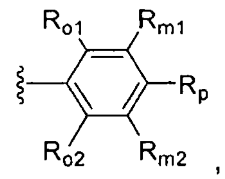
,

and $S_1$ to $S_4$ and $R_{o1}$, $R_{o2}$, $R_{m1}$, $R_{m2}$ and $R_p$ are as defined below:

| Phenolic part | | | | | Aniline part | | | | |
|---|---|---|---|---|---|---|---|---|---|
| Compound No. | $S^1$ | $S^2$ | $S^3$ | $S^4$ | $R_{o1}$ | $R_{o2}$ | $R_{m1}$ | $R_{m2}$ | $R_p$ |
| 1 | H | H | H | H | $-CH_3$ | H | H | H | H |
| 2 | H | H | $OCH_3$ | H | $-CH_3$ | H | H | H | H |
| 3 | H | $OCH_3$ | H | H | $-CH_3$ | H | H | H | H |
| 4 | H | H | $OCH_3$ | H | H | H | H | H | $-^tBut$ |
| 5 | H | $OCH_3$ | H | H | H | H | H | H | $-^tBut$ |
| 6 | $-^tBut$ | H | $-^tBut$ | H | $-CH_3$ | H | H | H | H |
| 7 | $-^tBut$ | H | $-^tBut$ | H | H | H | H | H | $-^tBut$ |
| 8 | H | $-^tBut$ | H | H | $CH_3$ | H | H | H | H |
| 9 | H | $-^tBut$ | H | H | H | H | H | H | $-^tBut$ |
| 10 | H | H | H | H | H | H | Br | H | H |
| 11 | H | H | H | H | H | H | H | H | $-^tBut$ |
| 12 | H | $OCH_3$ | H | H | H | H | H | H | $N(CH_3)_2$ |
| 13 | H | H | $OCH_3$ | H | $-CH_3$ | $-CH_3$ | H | H | H |
| 14 | H | $OCH_3$ | H | H | $-CH_3$ | $-CH_3$ | H | H | H |

**Patentansprüche**

**1.** Verfahren zur Herstellung eines Katalysators mit der folgenden Formel:

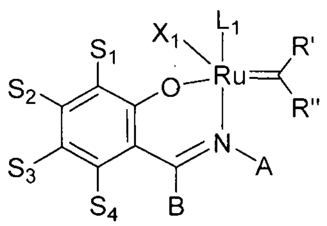

(I)

worin

$X_1$ für einen anionischen Liganden steht;
$L_1$ ein neutraler Elektronendonorligand ist;
R' und R" zusammen eine Benzylidengruppierung bilden;
$S_1$ bis $S_4$ gleich oder verschieden sein können und definiert sind wie für die Verbindung der nachfolgend gezeigten Formel (III);

A

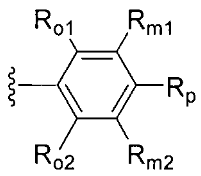

,

Heteroaryl, substituiertes oder unsubstituiertes Alkyl, Heteroalkyl oder Cycloalkyl ist;

B Wasserstoff, $C_1$-$C_{20}$-Alkyl, $C_1$-$C_{20}$-Heteroalkylaryl oder Heteroaryl ist, wobei jede Nicht-Wasserstoffgruppe optional substituiert sein kann mit einer oder mehreren Gruppierungen, ausgewählt aus der Gruppe, bestehend aus $C_1$-$C_{10}$-Alkyl und Aryl;

$P_{o1}$, $R_{o2}$, $R_{m1}$, $R_{m2}$ und $R_p$ jeweils ausgewählt sind aus der Gruppe, bestehend aus Wasserstoff, $C_1$-$C_{20}$-Alkyl, $C_1$-$C_{20}$-Heteroalkyl, $C_1$-$C_{20}$-Alkoxy, Aryl, Aryloxy, Heteroaryl, Heterocycloalkyl, Disulfid, Carbonat, Isocyanat, Carbodiimid, Carboalkoxy, Carbamat und Halogen, Thioether, Keton, Aldehyd, Ester, Ether, Amin, Amid, Nitro, Carbonsäure, wobei die Nicht-Wasserstoffgruppen optional substituiert sind mit einer oder mehreren Gruppierungen, ausgewählt aus der Gruppe, bestehend aus $C_1$-$C_{20}$-Alkyl, $C_1$-$C_{20}$-Alkoxy und Aryl, wobei $R_{o1}$, $R_{o2}$, $R_{m1}$, $R_{m2}$ und $R_p$ miteinander verbunden sein können, um einen fusionierten cyclischen aliphatischen oder aromatischen Ring zu bilden, der optional substituiert sein kann mit einer oder mehreren Gruppierungen, ausgewählt aus der Gruppe, bestehend aus $C_1$-$C_{20}$-Alkyl, $C_1$-$C_{20}$-Heteroalkyl, $C_1$-$C_{20}$-Alkoxy, Aryl, Aryloxy, Heteroaryl, Heterocycloalkyl, Disulfid, Carbonat, Isocyanat, Carbodiimid, Carboalkoxy, Carbamat und Halogen, Thioether, Keton, Aldehyd, Ester, Ether, Amin, Amid, Nitro, Carbonsäure, wobei die Nicht-Wasserstoffgruppen optional substituiert sein können mit einer oder mehreren Gruppierungen, ausgewählt aus der Gruppe, bestehend aus $C_1$-$C_{20}$-Alkyl, $C_1$-$C_{20}$-Alkoxy und Aryl, umfassend die folgenden Stufen:

(i) das Umsetzen einer Verbindung der Formel (V)

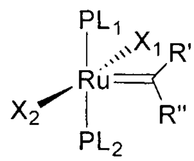

(V)

worin $PL_1$ und $PL_2$ für einen Phosphinliganden stehen, $X_1$ und $X_2$ für einen anionischen Liganden stehen und R' und R" wie voranstehend definiert sind, mit einem Precursor eines Nicht-Phosphinliganden $L_1$, wie oben definiert, um eine Verbindung der Formel (VI) zu erhalten

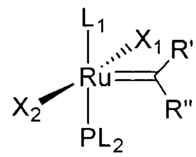

(VI)

worin $L_1$, $PL_2$, $X_1$, $X_2$, R' und R" wie voranstehend definiert sind, und
(ii) das Umsetzen der Verbindung der Formel (VI) mit einer Verbindung der Formel (III)

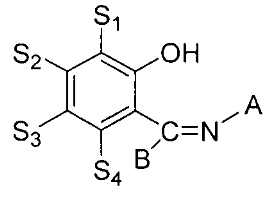

(III)

worin A und B wie voranstehend definiert sind und worin $8_1$ bis $S_4$ Substituenten sind, die so ausgewählt sind, dass die Verbindung der Formel (III) einen $pk_a \geq 6{,}2$ aufweist, und zwar in der Gegenwart einer schwachen Base mit einem $pK_b$ im Bereich von 3,5 - 7,0.

**2.** Verfahren nach Anspruch 1, wobei die schwache Base ausgewählt ist aus der Gruppe, bestehend aus $Ag_2CO_3$, $CuCO_3$, $Li_2CO_3$, $Na_2CO_3$ und $K_2CO_3$.

**3.** Verfahren nach Anspruch 1 oder 2, wobei die schwache Base in einer Menge von 1 bis 2 Äquivalenten relativ zur Menge der Verbindung (III) verwendet wird.

**4.** Verfahren nach Anspruch 1, wobei in der Stufe (i) die Verbindungen der Formeln (II) und (III) und die schwache Base vermischt werden und ein Lösungsmittel zugegeben wird.

**5.** Verfahren nach Anspruch 4, wobei das Lösungsmittel eine dielektrische Konstante ≥ 3 aufweist.

**6.** Verfahren nach Anspruch 5, wobei das Lösungsmittel ausgewählt ist aus der Gruppe, bestehend aus Tetrahydrofuran, $CH_2Cl_2$, Chloroform, Diethylether und Gemischen davon.

**7.** Verfahren nach Anspruch 1, wobei $L_1$ SIMes (1,3-Bis(mesityl)-2-imidazol-dinyliden oder 1,3-Bis(2,4,5-trimethylphenyl)-4,5-dihydroimidazol-2-yliden) oder IMes (1,3-Bis(2,4,6-trimethylphenyl)imidazol-2-yliden) ist.

**8.** Verfahren nach Anspruch 1, wobei $X_1$ und/oder $X_2$ Halogen, bevorzugt Chlorid, ist.

**9.** Verfahren nach Anspruch 1, wobei die Substituenten $S_1$ bis $S_4$ ausgewählt sind aus der Gruppe, bestehend aus Wasserstoff, Amino, substituiertem oder unsubstituiertem Mono- und Dialkylamino, $C_1$-$C_{20}$-Alkyl, Thioalkyl, Aryl und Aryloxy.

**10.** Verfahren nach Anspruch 1, wobei die Substituenten $S_1$ bis $S_4$ ausgewählt sind aus der Gruppe, bestehend aus Wasserstoff, Methoxy, Methylthio, Amino, Dimethylamino, Trifluormethyl, Trifluormethoxy, t-Butyl, Phenyl, Phenoxy, Chlor, Brom, Piperidinyl, 1-Pyrrolidino, 4-tert-Butylphenoxy und 2-Pyridyl.

**11.** Verfahren nach Anspruch 1, wobei $R_{o1}$, $R_{o2}$. $R_{m1}$, $R_{m2}$ und $R_p$ ausgewählt sind aus der Gruppe, bestehend aus Wasserstoff, Methyl, Isopropyl, t-Butyl, Methoxy, Dimethylamino und Nitro.

**12.** Verfahren nach Anspruch 1, wobei die Verbindung der Formel (III) eine Verbindung ist, die ausgewählt ist aus der Gruppe, bestehend aus den Verbindungen Nr. 1 bis 14, wobei B Wasserstoff ist, A

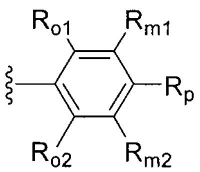

ist und $S_1$ bis $S_4$ und $R_{o1}$, $R_{o2}$. $R_{m1}$, $R_{m2}$ und $R_p$ wie folgt definiert sind:

| Phenolischer Teil | | | | | Anilinteil | | | | |
|---|---|---|---|---|---|---|---|---|---|
| Verbindung Nr. | $S_1$ | $S_2$ | $S_3$ | $S_4$ | $R_{o1}$ | $R_{o2}$ | $R_{m1}$ | $R_{m2}$ | $R_p$ |
| 1 | H | H | H | H | $-CH_3$ | H | H | H | H |
| 2 | H | H | $OCH_3$ | H | $-CH_3$ | H | H | H | H |
| 3 | H | $OCH_3$ | H | H | $-CH_3$ | H | H | H | H |
| 4 | H | H | $OCH_3$ | H | H | H | H | H | $-^tBut$ |
| 5 | H | $OCH_3$ | H | H | H | H | H | H | $-^tBut$ |
| 6 | $-^tBut$ | H | $-^tBut$ | H | $-CH_3$ | H | H | H | H |
| 7 | $-^tBut$ | H | $-^tBut$ | H | H | H | H | H | $-^tBut$ |
| 8 | H | $-^tBut$ | H | H | $CH_3$ | H | H | H | H |

(fortgesetzt)

| Phenolischer Teil | | | | | Anilinteil | | | | |
|---|---|---|---|---|---|---|---|---|---|
| Verbindung Nr. | $S_1$ | $S_2$ | $S_3$ | $S_4$ | $R_{o1}$ | $R_{o2}$ | $R_{m1}$ | $R_{m2}$ | $R_p$ |
| 9 | H | $-^tBut$ | H | H | H | H | H | H | $-^tBut$ |
| 10 | H | H | H | H | H | H | Br | H | H |
| 11 | H | H | H | H | H | H | H | H | $-^tBut$ |
| 12 | H | $OCH_3$ | H | H | H | H | H | H | $N(CH_3)_2$ |
| 13 | H | H | $OCH_3$ | H | $-CH_3$ | $-CH_3$ | H | H | H |
| 14 | H | $OCH_3$ | H | H | $-CH_3$ | $-CH_3$ | H | H | H |

## Revendications

**1.** Procédé pour la préparation d'un catalyseur répondant à la formule suivante :

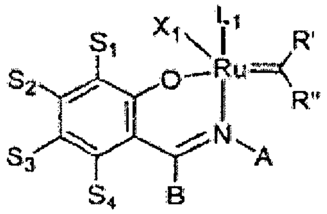

(I)

dans laquelle

$X_1$ indique un ligand anionique ;
$L_1$ est un ligand donneur d'électron neutre ;
R' et R" forment ensemble un fragment benzylidène ;
$S_1$ à $S_4$ peuvent être identiques ou différents et sont définis comme pour le composé de formule (III) représenté ci-dessous ;
A est

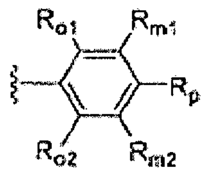

,

hétéroaryle, alkyle substitué ou non substitué, hétéroalkyle ou cycloalkyle ;
B est hydrogène, alkyle en $C_1$ à $C_{20}$, hétéroalkyle en $C_1$ à $C_{20}$, aryle ou hétéroaryle, dans lequel chaque groupe non-hydrogène peut être facultativement substitué par un ou plusieurs fragments choisis dans le groupe constitué d'alkyle en $C_1$ à $C_{10}$ et aryle ;
$R_{o1}$, $R_{o2}$, $R_{m1}$, $R_{m2}$ et $R_p$ sont chacun choisis dans le groupe constitué d'hydrogène, alkyle en $C_1$ à $C_{20}$, hétéroalkyle en $C_1$ à $C_{20}$ alcoxy en $C_1$ à $C_{20}$, aryle, aryloxy, hétéroaryle, hétérocycloalkyle, disulfure, carbonate, isocyanate, carbodiimide, carboalcoxy, carbamate et halogène, thioéther, cétone, aldéhyde, ester, éther, amine, amide, nitro, acide carboxylique, les groupes non-hydrogène étant facultativement substitués par un ou plusieurs fragments choisis dans le groupe constitué d' alkyle en $C_1$ à $C_{20}$, alcoxy en $C_1$ à $C_{20}$ et aryle, dans laquelle $R_{o1}$, $R_{o2}$, $R_{m1}$, $R_{m2}$ et $R_p$ peuvent être assemblés pour former un cycle aliphatique ou aromatique cyclique fusionné facultativement substitué par un ou plusieurs fragments choisis dans le groupe constitué d'alkyle en $C_1$ à $C_{20}$, hétéroalkyle en $C_1$ à $C_{20}$, alcoxy en $C_1$ à $C_{20}$, aryle, aryloxy, hétéroaryle, hétérocycloalkyle, disulfure, carbonate, isocyanate, carbodiimide, carboalcoxy, carbamate et halogène, thioéther, cétone, aldéhyde, ester, éther, amine, amide, nitro, acide carboxylique, les groupes non-hydrogène étant facultativement substitués par un ou plusieurs fragments choisis dans le groupe constitué d'alkyle en $C_1$ à $C_{20}$, alcoxy en $C_1$ à $C_{20}$ et aryle,

comprenant les étapes suivantes :

(i) la mise en réaction d'un composé de formule (V)

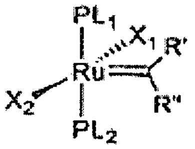

(V)

dans laquelle $PL_1$ et $PL_2$ indiquent un ligand phosphine, $X_1$ et $X_2$ indiquent un ligand anionique et R' et R" sont tels que définis ci-dessus, avec un précurseur d'un ligand non-phosphine $L_1$ tel que défini ci-dessus pour obtenir un composé de formule (VI)

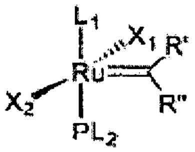

(VI)

dans laquelle $L_1$, $PL_2$, $X_1$, $X_2$, R' et R" sont tels que définis ci-dessus, et
(ii) la mise en réaction du composé de formule (VI) avec un composé de la formule (III)

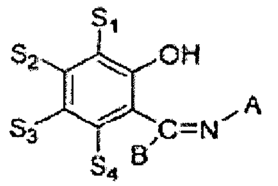

(III)

dans laquelle A et B sont tels que définis ci-dessus et dans laquelle $S_1$ à $S_4$ sont des substituants qui sont choisis de sorte que le composé de formule (III) ait un $pK_a \geq 6,2$, en présence d'une base faible ayant un $pK_b$ dans la plage de 3,5 à 7,0.

**2.** Procédé selon la revendication 1, dans lequel la base faible est choisie dans le groupe constitué de $Ag_2CO_3$, $CuCO_3$, $Li_2$ $CO_3$, $Na_2$ $CO_3$ et $K_2CO_3$.

**3.** Procédé selon la revendication 1 ou 2, dans lequel la base faible est utilisée dans une quantité de 1 à 2 équivalents par rapport à la quantité de composé (III).

**4.** Procédé selon la revendication 1, dans lequel à l'étape (i) les composés des formules (II) et (III) et la base faible sont mélangés et un solvant est ajouté.

**5.** Procédé selon la revendication 4, dans lequel le solvant a une constante diélectrique $\geq 3$.

**6.** Procédé selon la revendication 5, dans lequel le solvant est choisi dans le groupe constitué de tétrahydrofurane, $CH_2Cl_2$, chloroforme, diéthyléther et leurs mélanges.

**7.** Procédé selon la revendication 1, dans lequel $L_1$ est SIMes (1,3-bis(mésityl)-2-imidazol-dinylidène ou 1,3-bis(2,4,5-triméthylphényl)-4,5-dihydroimidazol-2-ylidène) ou IMes (1,3-bis(2,4,6-triméthylphényl)imidazol-2-ylidène).

**8.** Procédé selon la revendication 1, dans lequel $X_1$ et/ou $X_2$ sont halogène, de préférence chlorure.

**9.** Procédé selon la revendication 1, dans lequel les substituants $S_1$ à $S_4$ sont choisis dans le groupe constitué d'hydrogène, amino, mono- et dialkylamino substitué ou non substitué, alkyle en $C_1$ à $C_{20}$, thioalkyle, aryle et aryloxy.

**10.** Procédé selon la revendication 1, dans lequel les substituants $S_1$ à $S_4$ sont choisis dans le groupe constitué d'hydrogène, méthoxy, méthylthio, amino, diméthylamino, trifluorométhyle, trifluorométhoxy, t-butyle, phényle, phénoxy,

chloro, bromo, pipéridinyle, 1-pyrrolidino, 4-tert-butylphénoxy et 2-pyridyle.

**11.** Procédé selon la revendication 1, dans lequel $R_{o1}$, $R_{o2}$, $R_{m1}$, $R_{m2}$ et $R_p$ sont choisis dans le groupe constitué d'hydrogène, méthyle, isopropyle, t-butyle, méthoxy, diméthylamino et nitro.

**12.** Procédé selon la revendication 1, dans lequel le composé de formule (III) est un composé choisi dans le groupe constitué des composés n° 1 à 14, dans lequel B est hydrogène, A est

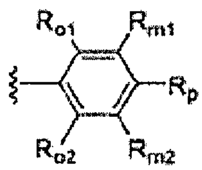
,

et $S_1$ à $S_4$ et $R_{o1}$, $R_{o2}$, $R_{m1,}$ $R_{m2}$ et $R_p$ sont tels que définis ci-dessous :

| **Partie phénolique** | | | | | **Partie aniline** | | | | |
|---|---|---|---|---|---|---|---|---|---|
| Composé n° | $S^1$ | $S^2$ | $S^3$ | $S^4$ | $R_{o1}$ | $R_{o2}$ | $R_{m1}$ | $R_{m2}$ | $R_p$ |
| 1 | H | H | H | H | $-CH_3$ | H | H | H | H |
| 2 | H | H | $OCH_3$ | H | $CH_3$ | H | H | H | H |
| 3 | H | $OCH_3$ | H | H | $-CH_3$ | H | H | H | H |
| 4 | H | H | $OCH_3$ | H | H | H | H | H | $-^tBut$ |
| 5 | H | $OCH_3$ | H | H | H | H | H | H | $-^tBut$ |
| 6 | $-^tBut$ | H | $-^tBut$ | H | $-CH_3$ | H | H | H | H |
| 7 | $-^tBut$ | H | $-^tBut$ | H | H | H | H | H | $-^tBut$ |
| 8 | H | $-^tBut$ | H | H | $CH_3$ | H | H | H | H |
| 9 | H | $-^tBut$ | H | H | H | H | H | H | $-^tBut$ |
| 10 | H | H | H | H | H | H | Br | H | H |
| 11 | H | H | H | H | H | H | H | H | $-^tBut$ |
| 12 | H | $OCH_3$ | H | H | H | H | H | H | $N(CH_3)_2$ |
| 13 | H | H | $OCH_3$ | H | $-CH_3$ | $-CH_3$ | H | H | H |
| 14 | H | $OCH_3$ | H | H | $-CH_3$ | $-CH_3$ | H | H | H |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S. CHANG ; LEROY JONES II ; CH. WANG ; L. M. HENLING ; R. H. GRUBBS.** *Organometallics,* 1998, vol. 17, 3460-3465
- **G. OCCHIPINTI ; V. R. JENSEN ; H. R. BJ∅RSVIK.** *J. Org. Chem.,* 2007, vol. 72, 3561-564
- **B. ALLAERT ; N. DIELTIENS ; N. LEDOUX ; C. VERCAEMST ; P. VAN DER VOORT ; CH. V. STEVENS ; A. LINDEN ; F. VERPOORT.** *J. Mol. Cat. A,* 2006, vol. 260, 221-226
- *J. Org. Chem.,* 2007, vol. 72, 3561-3564
- **BJ∅RSVIK.** *J. Org. Chem.,* 2007, vol. 72, 3561-3564